# NEUE EUROPÄISCHE PATENTSCHRIFT

(11) **EP 0 918 668 B2**
(45) Veröffentlichungstag und Bekanntmachung des Hinweises auf die Entscheidung über den Einspruch: **03.09.2003**
(45) Hinweis auf die Patenterteilung: 05.04.2000
(21) Anmeldenummer: 97941791.2
(22) Anmeldetag: 13.08.1997
(51) Int. Cl.: B60R 21/32, B60R 21/13, B60R 22/46

(54) **ANORDNUNG ZUM AUSLÖSEN VON RÜCKHALTEMITTELN IN EINEM KRAFTFAHRZEUG**
DEVICE FOR RELEASING RESTRAINING MEANS IN A MOTOR VEHICLE
DISPOSITIF DE LIBERATION DE MOYENS DE RETENUE DANS UN VEHICULE A MOTEUR

(30) Priorität: 14.08.1996 DE 19632836
(43) Veröffentlichungstag der Anmeldung: 02.06.1999
(73) Patentinhaber: SIEMENS AKTIENGESELLSCHAFT, 80333 München (DE)
(72) Erfinder: FRANCIS, Kenneth, D-93087 Alteglofsheim (DE); HÄRTL, Alfons, D-93077 Bad Abbach (DE)
(86) Internationale Anmeldenummer: DE9701722
(87) Internationale Veröffentlichungsnummer: WO98006604

(56) Entgegenhaltungen:
- EP-A- 0 430 813
- EP-A- 0 686 533
- WO-A-96/09193
- DE-A- 4 041 049
- DE-C- 4 436 162
- US-A- 5 408 411

## Beschreibung

Die Erfindung betrifft eine Anordnung zum Auslösen von Rückhaltemitteln in einem Kraftfahrzeug gemäß Oberbegriff von Patentanspruch 1.

Eine solche Anordnung ist aus der EP 0 686 533 A1 bekannt: Eine Sensoreinrichtung weist zwei Beschleunigungssensoren auf, deren Empfindlichkeitsachsen um +/- 45° zur Fahrzeuglängsachse versetzt angeordnet sind. Die von den Beschleunigungssensoren gelieferten Beschleunigungssignale werden in einer Auswerteschaltung ausgewertet. Von einer Auslöseschaltung wird abhängig von den Beschleunigungssignalen und einer Sitzbelegungserkennung ein Auslösesignal je nach Richtung und Stärke des Aufpralls für ein oder mehrere ausgewählte Rückhaltemittel erzeugt.

Zur Überschlagerkennung in einem Kraftfahrzeug wird in der DE 44 36 379 A1 ein Neigungswinkelsensor vorgeschlagen, der zwei zueinander unterschiedlich ausgerichtete Beschleunigungssensoren enthält, deren Empfindlichkeitsachsen in der Neigungsebene angeordnet sind.

Aus der DE 41 14 992 C1 ist ein Neigungswinkelsensor mit einem V-förmigen Hohlprofil bekannt. Elektroden an den Hohlprofilwänden dienen zum Erkennen einer Positionsänderung eines im Hohlprofil angeordneten Massenstücks.

Aus der DE 37 05 920 C2 ist ein Beschleunigungssensor zur Aufnahme von Beschleunigungen in drei Raumrichtungen vorgeschlagen, der drei um 90° zueinander versetzte Spulen aufweist, innerhalb der ein Magnet kardanisch aufgehängt ist.

Sogenannte Local impacts, bei denen das Fahrzeug einen zur Fahrzeugslängs- bzw. Querachse versetzten Aufprall erleidet, sind eine im Straßenverkehr häufig auftretende Unfallart. Local Impacts sind typisch für den Zusammenstoß zweier Fahrzeuge an Kreuzungen, für Unfälle beim Überholen eines Fahrzeugs oder für Unfälle beim Einscheren nach einem Überholvorgang. Bei solchen Unfällen schleudert bzw. dreht sich das Fahrzeug um die eigene Hochachse. Ein Auslösen von ausgewählten Rückhaltemitteln zum bestmöglichen Schutz der Fahrzeuginsassen kann erforderlich sein, ohne daß jedoch die linearen Beschleunigungssensoren Beschleunigungssignale liefern, die zu einer Auslösung führen würden.

Aufgabe der Erfindung ist es deshalb, den Nachteil der bekannten Anordnung zu vermeiden, und insbesondere eine Anordnung zum Auslösen von Rückhaltemitteln in einem Kraftfahrzeug zu schaffen, die bei jeder erdenklichen Art eines Aufpralls/ Unfalls den Fahrzeuginsassen bestmöglich schützt.

Die Aufgabe wird gelöst durch die Merkmale des Patentanspruchs 1. Die Sensoreinrichtung der Anordnung weist einen Drehbewegungssensor zum Erkennen von Drehbewegungen um die Hochachse des Fahrzeugs auf. Damit können Schleuderbewegungen eines Fahrzeugs erkannt werden. In Abhängigkeit der Beschleunigungssignale der linearen Beschleunigungssensoren und des vom Drehbewegungssensor gelieferten Drehbewegungssignals wird ein Auslösesignal für zumindest ein Rückhaltemittel erzeugt.

Die erfindungsgemäße Anordnung bietet dem/den Insassen einen bestmöglichen Aufprallschutz, wobei sowohl lineare Beschleunigungen als auch Drehbewegungen von der Sensoreinrichtung erkannt werden und zu einer Auslöseentscheidung beitragen.

Vorzugsweise wird das/die bei einem Aufprall auszulösende/n Rückhaltemittel aus der Gesamtheit oder zumindest aus einer Anzahl von Rückhaltemitteln in Abhängigkeit von den Beschleunigungssignalen und dem Drehbewegungssignal ausgewählt.

Vorteilhafte Weiterbildungen der Erfindung sind in den Unteransprüchen gekennzeichnet.

Die Erfindung und ihre Weiterbildungen werden anhand der Zeichnung näher erläutert. Es zeigen:
- Figur 1:: Ein Blockschaltbild einer erfindungsgemäßen Anordnung,
- Figur 2:: Eine Draufsicht auf ein Kraftfahrzeug mit diversen Rückhaltemitteln und mit angedeuteten Stoßrichtungen,
- Figur 3:: Eine Vorderansicht eines Kraftfahrzeuges mit einer angedeuteten Kippbewegung,
- Figur 4:: Eine Seitenansicht eines Kraftfahrzeuges mit einer angedeuteten Nickbewegung,
- Figur 5:: Eine Draufsicht auf ein Kraftfahrzeug mit einer angedeuteten Schleuderbewegung, und
- Figur 6:: Eine Vorderansicht eines Kraftfahrzeugs mit diversen Rückhaltemitteln und mit angedeuteten Stoßrichtungen.

Gleiche Elemente bzw. Signale in den Figuren sind figurenübergreifend durch gleiche Bezugszeichen gekennzeichnet.

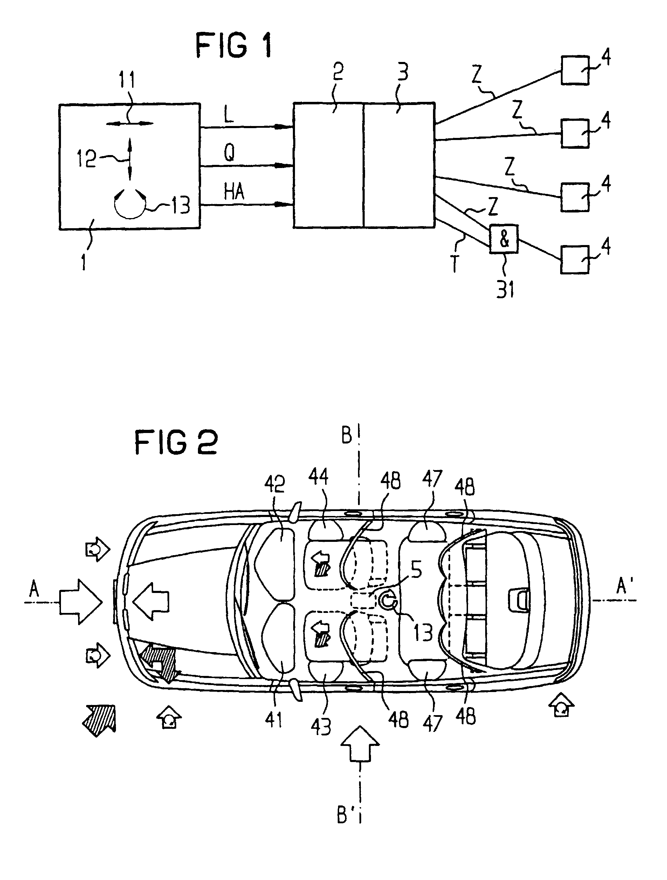

Figur 1 zeigt ein Blockschaltbild einer erfindungsgemäßen Anordnung mit zwei linearen Beschleunigungssensoren 11 und 12 und mit einem ersten Drehbewegungssensor 13. Die linearen Beschleunigungssensoren 11 und 12 sind orthogonal zueinander ausgerichtet, so daß beispielsweise der Längsbeschleunigungssensor 11 positive und negative Beschleunigungen in Richtung der Fahrzeuglängsachse A-A' gemäß Figur 2 aufnimmt, der Querbeschleunigungssensor 12 dagegen positive und negative Beschleunigungen in Richtung der Fahrzeugquerachse B-B' gemäß Figur 2. Der erste Drehbewegungssensor 13 nimmt positive und negative Drehbewegungen um die Fahrzeughochachse auf.

Von der Sensoreinrichtung 1 werden entsprechend ein Längsbeschleunigungssignal L, ein Querbeschleunigungssignal Q und ein erstes Drehbewegungssignal HA an eine Auswerteschaltung 2 geliefert. In der Auswerteschaltung 2 werden die Sensorsignale L, Q, HA ausgewertet. So werden beispielsweise aus den Beschleunigungssignalen L, Q durch zeitliche Integration Geschwindigkeitssignale gewonnen, die mit zeitlich konstanten oder variablen Schwellwerten verglichen werden. In einer Auslöseschaltung 3 der Anordnung sind Auslösebedingungen für jedes Rückhaltemittel abgespeichert. Das Auslösesignal für jedes Rückhaltemittel wird also in Abhängigkeit der Beschleunigungssignale L, Q und des ersten Drehbewegungssignals HA erzeugt, wobei aus diesen Sensorsignalen L, Q, HA die Notwendigkeit des Auslösens des betreffenden Rückhaltemittels abgeleitet wird, z. B. durch Auswertung der Sensorsignale L, Q, HA hinsichtlich Aufprallart und Aufprallstärke. Alternativ wird ein Auslösesignal für zumindest eines der Rückhaltemittel - z.B. die Seiten- und Frontairbags - in Abhängigkeit der Beschleunigungssignale L, Q und des ersten Drehbewegungssignals HA erzeugt, wobei beispielsweise Auslösesignale für Gurtstraffer lediglich in Abhängigkeit von dem Längsbeschleunigungssignal L erzeugt werden.

Es wird für zumindest eines der Rückhaltemittel 4 ein Signal T für einen optimalen Auslösezeitpunkt des zugeordneten Rückhaltemittels 4 in Abhängigkeit der Beschleunigungssignale L,Q und des ersten Drehbewegungssignals HA von der Auslöseschaltung 3 ermittelt. Das Signal T für den optimalen Auslösezeitpunkt wird - wie auch das Auslösesignal Z, durch das die eigentliche Auslöseentscheidung getroffen wird - einem UND-Gatter 31 zugeführt, dessen Ausgang mit einem Zünder des zugeordneten Rückhaltemittels 4 verbunden ist. Insbesondere bei der Auslösung von Frontairbags, bei der eine verhältnismäßig lange Zeitspanne zwischen Aufprallbeginn und einem hinsichtlich des Insassenschutzes optimalen Auslösezeitpunktes liegen kann, kann das Auslösesignal Z bereits zu einem sehr frühen Zeitpunkt erzeugt werden, zu dem aber noch nicht die optimale Schutzwirkung des Frontaitbags für den Insassen erreicht wird. Durch das Erzeugen des Signals T zum optimalen Zündzeitpunkt und durch eine Freigabe der Zündung erst wenn das Signal T für den optimalen Zündzeitpunkt und das Auslösesignal Z gleichzeitig vorliegen, erfolgt eine Auslösung des zugeordneten Rückhaltemittels 4 immer zum optimalen Zündzeitpunkt.

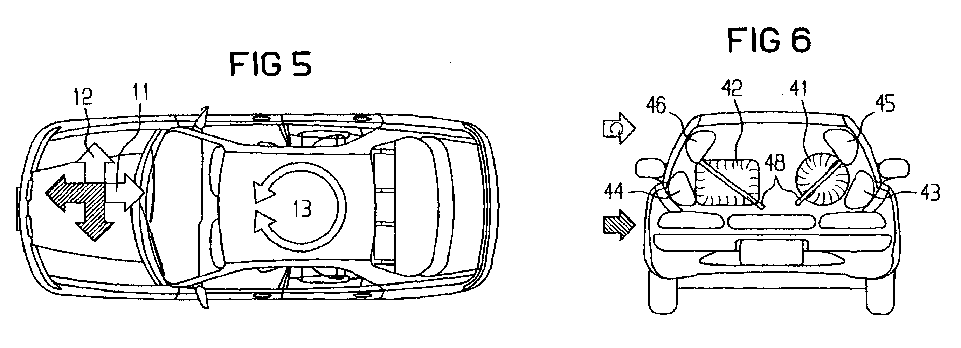

Figur 5 zeigt in einer Draufsicht auf ein Kraftfahrzeug die vorzugsweisen Empfindlichkeitsrichtungen, die mit einer Sensoreinrichtung mit einem Längsbeschleunigungssensor 11, einem Querbeschleunigungssensor 12 und einem ersten Drehbewegungssensor 13 zum Erkennen von Drehbewegungen um die Hochachse des Fahrzeugs erkannt werden können. Die linearen Beschleunigungssensoren 11 und 12 können natürlich auch in anderen Winkeln als dem vorzugsweisen 90 Grad-Winkel zueinander angeordnet sein. In jedem Fall sollte mit den Sensoren 11, 12 ein Stoß auf das Fahrzeug von vorne, von hinten, von den Seiten und unter einem schrägen Winkel erkannt werden. Damit müssen die Empfindlichkeitsachsen der Beschleunigungssensoren 11, 12 zumindest unterschiedlich ausgerichtet sein.

Linear ausgebildete Beschleunigungssensoren wie die Sensoren 11 und 12 weisen meist eine sogenannte Kosinus-Empfindlichkeitscharakteristik auf. Dies bedeutet, daß die von dem Sensor erkannte Beschleunigung gleich ist der auf den Sensor einwirkenden Beschleunigung multipliziert mit dem Kosinus des Winkels zwischen einwirkender Richtung der Beschleunigung und Empfindlichkeitsachse des Beschleunigungssensors. Je größer der Winkel zwischen auftretender Beschleunigung und Empfindlichkeitsachse des Sensors ist, desto schwächer ist das aufgenommene Beschleunigungssignal ausgebildet. Bei einer Anordnung der linearen Beschleunigungssensoren 11 und 12 gemäß Figur 5 wird bei einem Aufprall in einem Winkel von beispielsweise 45° zur Fahrzeuglängsachse von beiden Sensoren 11 und 12 nur schwache Beschleunigungssignale L bzw Q geliefert, so daß die Auflösung dieser Signale gerade hinsichtlich einer fein abgestimmten Auslösestrategie unzureichend ist. Gerade hier wird durch das Hinzuziehen eines Drehbewegungssensors 13 eine Verbesserung hinsichtlich der Feinheit der Auslöseentscheidung erreicht, da auch bei den meisten auf den Fahrzeugmittelpunkt gerichteten Stößen das Fahrzeug die durch den Stoß übertragene Energie durch eine mehr oder weniger starke Schlingerbewegung abbaut, die durch den Drehbewegungssensor 13 aufgenommen wird Der Drehbewegungssensor 13 kann also auch bei auf die Fahrzeugmitte ausgerichteten Stößen zur Auswahl- und Auslöseentsscheidung der Anordnung beitragen.

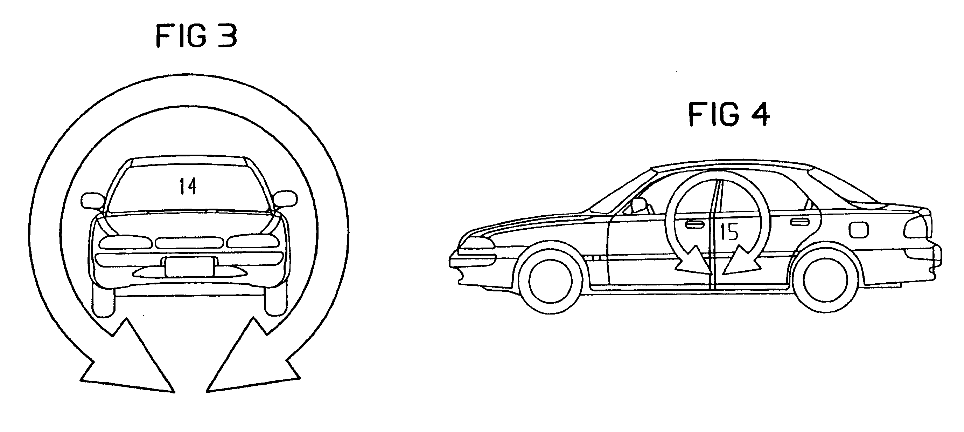

Um die Fahrzeuginsassen auch bei einem Aufprall zu schützen, bei dem die Aufprallenergie nicht nur auf die durch die Fahrzeuglängsachse A-A' und die Fahrzeugquerachse B-B' festgelegte Ebene übertragen wird, sondern bei dem das Fahrzeug kippt (Figur 3) oder nickt (Figur 4), ist zusätzlich zu den bereits genannten Sensoren 11, 12 und 13 ein zweiter Drehbewegungssensor 14 zum Erkennen von Drehbewegungen um die Längsachse des Fahrzeugs und/oder ein dritter Drehbewegungssensor 15 zum Erkennen von Drehbewegungen um die Querachse des Fahrzeugs (Figur 4) in der Sensoreinrichtung 1 angeordnet. Der zweite Drehbewegungssensor 14 erkennt dabei vorzugsweise Überschläge des Fahrzeugs um seine Längsachse, der dritte Drehbewegungssensor Überschläge des Fahrzeugs um seine Querachse bzw. Ansätze dazu wie bei der Unterfahrt eines Fahrzeugs unter einen Lkw. Die vom zweiten und dritten Drehbewegungssensor 14 und 15 gelieferten zweiten und dritten Drehbewegungssignale LA und QA werden wie die Längs- und Querbeschleunigungssignale L und Q und das erste Drehbewegungssignal HA in der Auswerte- und Auslöseschaltung 2, 3 verarbeitet.

Die Sensoren 11 bis 13 ggf. auch 14 und 15 sind vorzugsweise in einem gemeinsamen Gehäuse angeordnet. Von der Erfindung mit umfaßt sind auch lineare Beschleunigungssensoren, die nicht baulich voneinander getrennt sind, sondern die beispielsweise eine gemeinsame seismischen Masse und mehrere Positionsfühler bezüglich der seismischen Masse aufweisen, durch die eine lineare Beschleunigung in einer Ebene erkannt wird. Die verwendeten Drehbewegungssensoren können nach verschiedenen physikalischen Prinzipien arbeiten (optisch, kapazitiv, induktiv,...), wobei es bei der Erfindung nicht auf das dem Drehbewegungssensor zugrundeliegende physikalische Prinzip ankommt. Vorzugsweise wird dieser Drehbewegungssensor auch von einer Steuereinheit zum Steuern der Fahrstabilität verwendet und ist vorzugsweise in einem Steuergerät zum Steuern der Fahrstabilität angeordnet. Auch die anderen Drehbewegungssensoren können ggf. als Sensormittel für die Fahrdynamik, verwendbar zum Steuern der Fahrstabilität, verwendet werden. Vorzugsweise sind die verwendeten Sensoren mikromechanisch ausgebildet und auf einem gemeinsamen Substrat angeordnet, wobei zudem die Auswerte- und ggf. die Auslöseschaltung 2 und 3 auf demselben Substrat integriert sind. Ein solches Steuergerät 5 (Figur 2) ist vorzugsweise in einem mittleren Bereich des Fahrzeugs - beispielsweise am Fahrzeugtunnel - angeordnet. Dabei kann ggf. die Sensoreinrichtung 1 an einer anderen Stelle im Fahrzeug angeordnet sein.

Figur 2 zeigt ein Fahrzeug in einer Draufsicht mit diversen Rückhaltemitteln, die durch die erfindungsgemäße Anordnung einzeln, miteinander, zeitlich versetzt und ausgewählt ausgelöst werden können: Die Anordnung gemäß Figur 2 weist dabei einen Frontairbag für den Fahrer 41, einen Frontairbag für den Beifahrer 42, einen Seitenairbag für den Fahrer 43, einen Seitenairbag für den Beifahrer 44, einen Kopfairbag für den Fahrer 45, einen Kopfairbag für den Beifahrer 46, Seitenairbags für die Fondinsassen 47 und diverse Gurtstraffer 48 auf. Durch diejenigen Pfeile in Figur 2, die in ihrem Inneren wiederum einen Ringpfeil aufweisen, sind Aufprallorte gekennzeichnet, die eine Drehbewegung des Fahrzeugs um seine Hochachse verursachen. Die Pfeile außerhalb des Fahrzeugs ohne Ringpfeil kennzeichnen einen Front- bzw einen Seitenaufprall.

In Figur 6 ist die Vorderansicht eines Kraftfahrzeugs gezeigt. Der Pfeil mit dem Ringpfeil in seiner Mitte deutet auf einen Aufprall hin, der ein Kippen des Fahrzeugs um seine Längsachse verursacht.

## Patentansprüche

1. Anordnung zum Auslösen von Rückhaltemitteln in einem Kraftfahrzeug, mit einer Sensoreinrichtung (1), die zwei Beschleunigungssensoren (11,12) mit unterschiedlich ausgerichteten Empfindlichkeitsachsen aufweist, mit einer Auswerteschaltung (2) zum Auswerten der von den Beschleunigungssensoren (11,12) gelieferten Beschleunigungssignale (L,Q), und mit einer Auslöseschaltung (3) zum Erzeugen eines Auslösesignals (Z) für zumindest ein Rückhaltemittel (4),
**dadurch gekennzeichnet,**
**daß** die Sensoreinrichtung (1) einen ersten Drehbewegungssensor (13) zum Erkennen von Drehbewegungen um die Hochachse des Fahrzeugs aufweist, welcher ein erstes Drehbewegungssignal (HA) liefert,
**daß** das Auslösesignal (Z) in Abhängigkeit der Beschleunigungssignale (L,Q) und des ersten Drehbewegungssignals (HA) erzeugt wird,
**daß** von der Auslöseschaltung (3) ein Signal (T) für einen Auslösezeitpunkt in Abhängigkeit der Beschleunigungssignale (L,Q) und des ersten Drehbewegungssignals (HA) ermittelt wird, und
**daß** das Rückhaltemittel (4) nur ausgelöst wird, wenn das Signal (T) für den Auslösezeitpunkt und das Auslösesignal (Z) gleichzeitig vorliegen.

2. Anordnung nach Anspruch 1, **dadurch gekennzeichnet, daß** die Sensoreinrichtung (1) einen zweiten Drehbewegungssensor (14) zum Erkennen von Drehbewegungen um die Längsachse des Fahrzeugs aufweist, und daß das Auslösesignal (Z) zusätzlich in Abhängigkeit des von dem zweiten Drehbewegungssensor (14) gelieferten zweiten Drehbewegungssignals (LA) erzeugt wird.

3. Anordnung nach Anspruch 1, **dadurch gekennzeichnet, daß** die Sensoreinrichtung (1) einen dritten Drehbewegungssensor (15) zum Erkennen von Drehbewegungen um die Querachse des Fahrzeugs aufweist, und daß das Auslösesignal (Z) zusätzlich in Abhängigkeit des von dem dritten Drehbewegungssensor (15) gelieferten dritten Drehbewegungssignals (QA) erzeugt wird.

4. Anordnung nach Anspruch 1, **dadurch gekennzeichnet, daß** in der Auslöseschaltung (3) das/die bei einem Aufprall auszulösende/n Rückhaltemittel aus der Gesamtheit der Rückhaltemittel in Abhängigkeit von den Beschleunigungssignalen (L,Q) und dem ersten Drehbewegungssignal (HA) ausgewählt wird.

5. Anordnung nach Anspruch 1, **dadurch gekennzeichnet, daß** zumindest eines der Rückhaltemittel (4) mindestens zwei aktivierbare Stufen mit unterschiedlicher Schutzwirkung für den Insassen aufweist, und daß die Auslöseschaltung (3) zum Auswählen der geeigneten Schutzstufe des Rückhaltemittels (4) in Abhängigkeit von den Beschleunigungssignalen (L,Q) und dem ersten Drehbewegungssignal (HA) ausgebildet ist.

6. Anordnung nach Anspruch 5, **dadurch gekenn-zeichnet, daß** die Sensoreinrichtung (1), die Auswerteschaltung (2) und die Auslöseschaltung (3) in einem gemeinsamen Steuergerät (5) angeordnet sind, das in einem mittleren Bereich des Fahrzeugs angebracht ist.

7. Anordnung nach Anspruch 1, **dadurch gekennzeichnet, daß** die Rückhaltemittel (4) Frontairbags (41,42) und Seitenairbags (43,44,47) enthalten.

8. Anordnung nach Anspruch 2 und 7, **dadurch gekennzeichnet, daß** die Rückhaltemittel (4) ein Mittel zum Überrollschutz enthalten.

9. Anordnung nach Anspruch 1, **dadurch gekennzeichnet, daß** jedes Auslösesignal (Z) für ein beliebiges der Rückhaltemittel in Abhängigkeit der Beschleunigungssignale (L,Q) und des ersten Drehbewegungssignals (HA) erzeugt wird.

## Claims

1. Arrangement for triggering retention means in a motor vehicle, comprising a sensor assembly (1) that has two acceleration sensors (11,12) with their sensitivity axes aligned in different directions, also comprising an evaluation circuit (2) for evaluating the acceleration signals (L,Q) supplied by the acceleration sensors (11, 12), and comprising a triggering circuit (3) for generating a triggering signal (Z) for at least one retention means (4).
**characterised in that**
the sensor assembly (1) has a first rotary motion sensor (13) for detecting rotary motion about the vertical axis of the vehicle, said sensor producing a first rotary motion signal (HA),
**in that** generation of the triggering signal (Z) is dependent on the acceleration signals (L, Q) and on the first rotary motion signal (HA),
**in that** the triggering circuit (3) derives a signal (T) indicating a triggering instant in dependence on the acceleration signals (L, Q) and the first rotary motion signal (HA), and **in that** the retention means (4) is only triggered if both the signal (T) for the triggering instant and the triggering signal (Z) are present at the same time.

2. Arrangement in accordance with Claim 1, **characterised in that** the sensor assembly (1) has a second rotary motion sensor (14) for detecting rotary motion about the longitudinal axis of the vehicle, and **in that** generation of the triggering signal (Z) is additionally dependent on the second rotary motion signal (LA) supplied by the second rotary motion sensor (14).

3. Arrangement in accordance with Claim 1, **characterised in that** the sensor assembly (1) has a third rotary motion sensor (15) for detecting rotary motion about the transverse axis of the vehicle, and **in that** generation of the triggering signal (Z) is additionally dependent on the third rotary motion signal (QA) supplied by the second rotary motion sensor (15).

4. Arrangement in accordance with Claim 1, **characterised in that** the retention means to be triggered in the event of an impact is/are selected by the triggering circuit (3) from the total number of retention means present in dependence on the acceleration signals (L,Q) and the first rotary motion signal (HA).

5. Arrangement in accordance with Claim 1, **characterised in that** at least one of the retention means (4) has at least two stages of activation with different levels of protection for the occupant, and **in that** the triggering circuit (3) is designed to select the appropriate protection level of the retention means (4) in dependence on the acceleration signals (L,Q) and the first rotary motion signal (HA).

6. Arrangement in accordance with Claim 5, **characterised in that** the sensor assembly (1), the evaluation circuit (2) and the triggering circuit (3) are accommodated in a common controller (5) which is located in a central area of the vehicle.

7. Arrangement in accordance with Claim 1, **characterised in that** the retention means (4) comprise front airbags (41,42) and side airbags (43,44,47).

8. Arrangement in accordance with Claims 2 and 7, **characterised in that** the retention means (4) comprise a means for protection against overturning.

9. Arrangement in accordance with Claim 1, **characterised in that** each triggering signal (Z) for any of the retention means is generated in dependence on the acceleration signals (L,Q) and the first rotary motion signal (HA).

## Revendications

1. Dispositif de déclenchement de moyens de retenue dans un véhicule à moteur, comportant une installation de capteurs (1), qui comporte deux capteurs d'accélération (11, 12) ayant des axes de sensibilité de direction différente, un montage d'exploitation (2) destiné á exploiter les signaux d'accélération (L, Q) fournis par les capteurs d'accélération (11, 12) et un montage de déclenchement (3) destiné à produire un signal de déclenchement (Z) pour au moins un moyen de retenue (4),
**caractérisé**
**en ce que** l'installation de capteurs (1) comporte un premier capteur de mouvement de rotation (13) destiné à la reconnaissance des mouvements de rotation autour de l'axe vertical du véhicule, qui fournit un premier signal de mouvement de rotation (HA), en ce que le signal de déclenchement (Z) est produit en fonction des signaux d'accélération (L,Q) et du premier signal de mouvement de rotation (HA),
**en ce que** le montage de déclenchement (3) fournit un signal (T) pour un moment de déclenchement en fonction des signaux d'accélération (L,Q) et du premier signal de mouvement de rotation (HA),
et **en ce que** le moyen de retenue (4) n'est déclenché que si le signal (T) pour le moment de déclenchement et le signal de déclenchement (Z) existent simultanément.

2. Dispositif selon la revendication 1, **caractérisé en ce que** l'installation de capteurs (1) comporte un deuxième capteur de mouvement de rotation (14) destiné à la reconnaissance de mouvements de rotation autour de l'axe longitudinal du véhicule, et **en ce que** le signal de déclenchement (Z) est produit de plus en fonction du deuxième signal de mouvement de rotation (LA) fourni par le deuxième capteur de mouvement de rotation (14).

3. Dispositif selon la revendication 1, **caractérisé en ce que** l'installation de capteurs (1) comporte un troisième capteur de rotation (15) destiné à la reconnaissance de mouvements de rotation autour de l'axe transversal du véhicule, et **en ce que** le signal de déclenchement (Z) est produit en plus en fonction du troisième signal de mouvement de rotation (QA) fourni par le troisième capteur de mouvement de rotation (15).

4. Dispositif selon la revendication 1, **caractérisé en ce que**, dans le montage de déclenchement (3), le ou les moyens de retenue a déclencher lors d'un choc sont sélectionnés parmi la totalité des moyens de retenue en fonction des signaux d'accélération (L, Q) et du premier signal de mouvement de rotation (HA).

5. Dispositif selon la revendication 1, **caractérisé en ce que** au moins un des moyens de retenue (4) comporte au moins deux degrés activables avec un effet de protection différent pour les occupants, et **en ce que** le montage de déclenchement (3) destiné à la sélection du niveau de protection approprié du moyen de retenue (4) est conçu en fonction des signaux d'accélération (L, Q) et du premier signal de mouvement de rotation (HA).

6. Dispositif selon la revendication 5, **caractérisé en ce que** l'installation de capteurs (1), le montage d'exploitation (2) et le montage de déclenchement (3) sont placés dans un appareil de commande commun (5) logé dans une zone médiane du véhicule.

7. Dispositif selon la revendication 1, **caractérisé en ce que** les moyens de retenue (4) contiennent des coussins gonflables avant (41, 42) et des coussins gonflables latéraux (43, 44, 47).

8. Dispositif selon les revendications 2 et 7, **caractérisé en ce que** les moyens de retenue (4) contiennent un moyen de protection contre un rertournement.

9. Dispositif selon la revendication 1, **caractérisé en ce que** chaque signal de déclenchement (Z) pour un quelconque des moyens de retenue est produit en fonction des signaux d'accélération (L, Q) et du premier signal de mouvement de rotation (HA).
